# EUROPÄISCHE PATENTSCHRIFT

(11) **EP 3 617 823 B1**
(45) Veröffentlichungstag und Bekanntmachung des Hinweises auf die Patenterteilung: **24.11.2021**
(21) Anmeldenummer: 18192096.8
(22) Anmeldetag: 31.08.2018
(51) Int. Cl.: G05B 19/418, H04L 29/06, H04L 29/08

(54) **VERFAHREN ZUR INTEGRATION VON DATENQUELLEN SOWIE INTEGRATIONS-MIDDLEWARE**
METHOD FOR INTEGRATING DATA SOURCES AND INTEGRATION MIDDLEWARE
PROCÉDÉ D'INTÉGRATION DE SOURCES DE DONNÉES AINSI QU'INTERGICIEL D'INTÉGRATION

(43) Veröffentlichungstag der Anmeldung: 04.03.2020
(73) Patentinhaber: Schneider Electric Industries SAS, 92500 Rueil-Malmaison (FR)
(72) Erfinder: HARNISCHFEGER, Michael, 63776 Mömbris (DE)
(74) Vertreter: Stoffregen, Hans-Herbert

(56) Entgegenhaltungen:
- CN-B- 104 573 983
- KR-A- 20110 054 370
- US-A- 5 634 053
- US-A1- 2004 139 085
- US-A1- 2013 211 547
- US-A1- 2016 127 514
- US-A1- 2017 163 444
- US-A1- 2017 242 935
- US-A1- 2018 224 821
- Siemens Ag: "FDI-Device Integration-Best of Both Worlds", , 1. Juni 2010 (2010-06-01), XP055568183, Fürth, Germany Gefunden im Internet: URL:https://www.automation.siemens.com/w1/ efiles/automation-technology/pi/techn_publ ications/FDI_Device_Integration.pdf [gefunden am 2019-03-12]
- NAUMANN F ET AL: "TOGO-generating communication protocol implementations from formal specifications", FACTORY COMMUNICATION SYSTEMS, 1997. PROCEEDINGS. 1997 IEEE INTERNATIO NAL WORKSHOP ON BARCELONA, SPAIN 1-3 OCT. 1997, NEW YORK, NY, USA,IEEE, US, 1. Oktober 1997 (1997-10-01), Seiten 287-296, XP010255509, DOI: 10.1109/WFCS.1997.634311 ISBN: 978-0-7803-4182-1

## Beschreibung

Die Erfindung bezieht sich auf ein Verfahren zur Integration von heterogenen Datenquellen der Automatisierungstechnik in eine Automatisierungsanlage nach dem Oberbegriff des Anspruchs 1 sowie auf eine Integrations-Middleware zur Durchführung des Verfahrens nach dem Oberbegriff des Anspruchs 9.

Die Integration von Feldgeräten in eine Automatisierungsanlage ist in dem Aufsatz "FDI-Device Integration-Best of Both Worlds", ATP-Edition 6/2010, Seiten 16 - 19, beschrieben, wobei Feldgeräte mit dem FDI-Konzept (Field Device Integration IEC-62769) in eine Automatisierungsanlage integriert werden. Grundlage dieses Konzepts ist die Bereitstellung von Informationen zur Konfiguration von Feldgeräten in einem gerätespezifischen FDI-Paket.

Dieses FDI-Paket umfasst eine fest vorgegebene Informationsmenge, welche aus einer Device Definition, Business Logic, User Interface Description und User Interface Plug-Ins besteht. Die Device Definition umfasst Verwaltungsinformationen und das Gerätemodell. Die Business Logic beschreibt die Kommunikationslogik zum Gerät und dient der Konsistenzsicherung des Gerätemodells. Die User Interface Description beschreibt die Präsentation der Geräteparameter und Gerätefunktionen. Die User Interface Plug-Ins sind programmierte Komponenten von Oberflächenanteilen zur Darstellung der Geräteparameter und Funktionen.

FDI-Pakete werden typischerweise von Geräteherstellern erstellt und von Systemherstellern verwendet, um die Feldgeräte verschiedener Gerätehersteller in ein Produktivsystem zu integrieren und zu konfigurieren.

Die FDI-Technologie basiert auf einer Client-Server-Architektur, in der die Feldgeräte zentral von einem Server, dem FDI-Server, verwaltet werden. Auf diesem FDI-Server ist die Konfiguration der Automatisierungsanlage, im Einzelnen deren Topologie sowie die Konfiguration jedes Feldgerätes innerhalb dieser Topologie gespeichert. Die Feldgeräte der Automatisierungsanlage sind FDI-Clients.

Der Focus der FDI-Technologie liegt auf der Kommunikationsebene, um mit einem Tool die Geräte konfigurieren zu können. Auf der Datenebene verwendet jeder Hersteller eigene Datenmodelle bzw. Datenformate, so dass eine Verknüpfung und gemeinsame Verarbeitung und Nutzung der Daten erschwert ist. Mittels der FDI-Technologie kann jedes Gerät integriert werden, wobei die Geräte jedoch isoliert in einem gemeinsamen Framework betrachtet werden. Für einen Prozess oder eine Automatisierungsapplikation wird jedoch ein gemeinsamer Einsatz von geräteübergreifenden Daten benötigt.

Bei der Integration von Geräten und/oder Systemen mit unterschiedlichen Datenmodellen in eine bestehende Automatisierungsanlage besteht nach dem Stand der Technik die Problematik, dass die verschiedenen Datenmodelle unterschiedliche Semantik und/oder Syntaxregeln verwenden, z. B. proprietär (Modbus, u.a.), protokollspezifisch (EtherNet/IP, CIP, CANopen, u.a.) und/oder domain-, markt- oder segmentspezifisch (Spezifikation von Datenmodellen).

Für ein und denselben Parameter können in den unterschiedlichen Datenmodellen verschiedene Bezeichnungen wie z.B. "Geschwindigkeit", "Velocity" oder "Speed" verwendet werden, so dass die Datenverarbeitung in einem Client-Tool durch einen Benutzer erschwert wird. Aufgrund der verschiedenartigen Typen, Protokolle und/oder Datenmodelle muss für jedes Gerät bzw. System ein geräte- oder herstellerspezifisches Engineering-Tool eingesetzt werden. Zwar existieren auch Engineering-Tools mit verschiedenartigen Schnittstellen und Datenkonvertern, um eine Anpassung an die verschiedenartigen Geräte zu ermöglichen, was jedoch mit erheblichem Aufwand verbunden ist. Zudem können die Geräte je nach Protokolltyp und Anwendung unterschiedliche, nicht interoperable Datendarstellungen aufweisen, die ohne externes Wissen wie Benutzerwissen, Handbücher oder Gerätebeschreibungen nicht nutzbar sind.

Die US 2016/0127514 A1 offenbart ein Gateway mit einem gemeinsamen Datenformat. Das Gateway weist einen Datenspeicher auf, der ausgebildet ist, Daten in einem gemeinsamen Datenformat für den Betrieb von Applikationen bereitzustellen und weist Netzwerkinterfaces auf, die konfiguriert sind, um eine Applikation mit einem entfernten Gerät über ein Netzwerk zu verbinden.

Das Gateway umfasst Protokolladapter, die ausgebildet sind, um mit dem Gateway unter Verwendung eines Kommunikationsprotokolls des entfernten Geräts zu kommunizieren. Ferner sind Datenadapter vorgesehen, die konfiguriert sind, um Daten zwischen einem Format des entfernten Geräts und dem gemeinsamen Datenformat zu konvertieren.

Nach dem Stand der Technik sind eine Vielzahl von Datenadaptern zwingend notwendig, die jeweils auf ein bestimmtes Quellgerät abgestimmt sein müssen und nur Daten dieses Quellgeräts transformieren können.

Die US 2018/0224821 A1 betrifft ein Verfahren zum Betrieb einer programmierbaren Steuerung. Es wird eine Datentransformation beschrieben, wobei den Quelldaten ein Text zugeordnet wird. Folglich erfolgt keine Transformation der Quelldaten in Zieldaten, die semantisch und syntaktisch dem gemeinsamen Datenmodell entsprechen.

Die US 2013/211547 A1 betrifft einen Web-Server zur Bereitstellung von Websites. Ferner wird die Erzeugung eines virtuellen Images einer Datenbank beschrieben. Die Transformation von Quelldaten mit Zieldaten auf der Basis von Abbildungsvorschriften ist in dem Dokument nicht erwähnt.

Die US 2017/0242935 A1 betrifft eine Benutzerschnittstelle zur Handhabung und Darstellung von Daten eines industriellen Prozesses.

Die US 2004/0139085 A1 betrifft ein System zum Sammeln und Anzeigen von Prozessdaten unter Verwendung einer einheitlichen oder integrierten Navigations-Baum-Struktur unter Verwendung ein oder mehrerer einheitlichen Anzeigeformate, um einem Benutzer eine Ansicht in einer einheitlichen konsistenten Art bereitzustellen.

Die US 5,634,054 B betrifft ein zu einem Verbund zusammengeschlossenes Informationssystem und ein Verfahren zur Bereitstellung von Daten zur Filterung und Transformation heterogener Datenbasen.

Die DE 10 2013 100 139 A1 beschreibt ein Prozessdaten-Gateway für die Kommunikation von Prozessdaten zwischen einem Prozessdaten-Client und einem Prozessdaten-Server. Das Prozessdaten-Gateway weist einen WebSocket-Server auf, welcher dazu eingerichtet ist, eine Anfrage zum Lesen oder Schreiben von Prozessdaten gemäß einem Prozessdaten-Protokoll von dem Prozessdaten-Client entgegenzunehmen. Das Prozessdaten-Gateway weist ferner eine Prozessdaten-Logik auf, welche dazu eingerichtet ist, die Anfrage zum Lesen oder Schreiben von Prozessdaten gemäß des Prozessdaten-Protokolls zu interpretieren und in eine Anfrage gemäß eines Kommunikationsprotokolls (OPC-Klassik, OPC-UA) eines Prozessdaten-Servers zu übersetzen. Das Prozessdaten-Gateway weist ferner ein Interface auf, das als Schnittstelle zu einem Prozessdaten-Server dient und dazu eingerichtet ist, die übersetze Anfrage zum Lesen oder Schreiben von Prozessdaten an den Prozessdaten-Server zu senden.

Bei dem bekannten Verfahren erfolgt zwar clientseitig, d.h. zwischen dem Prozessdaten-Gateway und der Steuerungsebene, eine einheitliche Kommunikation auf Basis einer WebSocket-Verbindung, während die Kommunikation zwischen dem Prozessdaten-Gateway und der Geräteebene über unterschiedliche Protokolle erfolgt. Die Prozessdaten-Logik ermöglicht die Anfrage zum Lesen oder Schreiben von Prozessdaten gemäß des Prozessdaten-Protokolls zu interpretieren und in einer Anfrage gemäß eines Kommunikationsprotokolls (OPC-Klassik, OPC-UA) eines der Prozessdaten-Server zu übersetzen.

Das bekannte Verfahren sowie das bekannte Prozessdaten-Gateway sind zur Übertragung von Prozessdaten optimiert. Ein Hinweis zur Integration von verschiedenartigen Geräten und Systemen in die Automatisierungsanlage ist in der DE 10 2013 100 139 A1 nicht aufgezeigt.

Davon ausgehend liegt der vorliegenden Erfindung die Aufgabe zugrunde, ein Verfahren und eine Integrations-Middleware der eingangs genannten Art derart weiterzubilden, dass die Integration von heterogenen Datenquellen, wie Geräte und Systeme der Automatisierungstechnik, ermöglicht wird, wobei die proprietären Datenmodelle, Datenformate und Strukturen der heterogenen Datenquellen, wie Maschinen, Sensoren, Antriebssteuerungen, zu integrieren und eindeutig interpretierbar zu machen sind. So soll ein Anwendungskontext übergreifendes und einheitliches Verständnis der Daten ermöglicht werden. Insbesondere soll auch die Integration von Geräten und/oder Systemen aus unterschiedlichen Anwendungsbereichen (Domains), wie z. B. Produktionstechnik, Energietechnik, Gebäudetechnik mit unterschiedlichen Datenformaten und Datenmodellen ermöglicht werden. Ferner sollen Daten von unterschiedlich genutzten Technologien in der Automatisierungstechnik, wie z. B. verschiedene Daten durch Kommunikationsprotokoll, einheitlich und im Anwendungskontext zugänglich gemacht werden.

Die Aufgabe wird erfindungsgemäß durch ein Verfahren mit den Merkmalen des Anspruchs 1 gelöst. Die Quelldaten der zu integrierenden heterogenen Datenquellen werden mittels einer Ontologie-Engine oder eines Ontologie-Services durch Anwendung von Abbildungsvorschriften und/oder Datenbeziehungsvorschriften in semantisch und syntaktisch entsprechende Zieldaten eines gemeinsamen Datenmodells transformiert und die Zieldaten jeder Datenquelle werden jeweils in einem digitalen Repräsentanten in einer Datenabstraktionsschicht gespeichert und für zumindest ein Client-Tool über ein Interface bereitgestellt.

Die Aufgabe wird erfindungsgemäß mittels einer Integrations-Middleware mit den Merkmalen des Anspruchs 9 gelöst. Die Integrations-Middleware weist einen Instanzen-Manager auf, der ausgebildet ist, für jede der Datenquellen jeweils einen digitalen Repräsentanten mit einem gemeinsamen Datenmodell zu erzeugen und in einer Datenabstraktionsschicht zu speichern. Der Instanzen-Manager ist mit einer Ontologie-Engine oder einem Ontologie-Service gekoppelt, mittels der oder dem die Quelldaten der zu integrierenden Datenquellen durch Anwenden von Abbildungsvorschriften in Zieldaten transformierbar sind, die semantisch und syntaktisch dem gemeinsamen Datenmodell entsprechen. Das zumindest eine Client-Tool ist über ein Interface mit den digitalen Repräsentanten verbindbar.

Zusammenfassend ist anzumerken, dass die Erfindung die Bildung der Datenabstraktions-Schicht aus Datenquellen des Gerätelevels für Client-Tools zum Gegenstand hat, wobei die Datenabstraktions-Schicht durch das einheitliche Interface unter vorzugsweiser Verwendung des OPC UA Standards oder eines Web Services bereitgestellt wird.

Das erfindungsgemäße Verfahren sowie die erfindungsgemäße Integrations-Middleware INW erlauben die Integration von verschiedenartigen Geräten (Typen, Protokolle, Hersteller mit verschiedenen Datendarstellungen), Geräten desselben Herstellers aus unterschiedlichen Anwendungsbereichen sowie die Integration von Geräten von Drittherstellern.

Die Geräte können auch aus verschiedenen Anwendungsbereichen (Domains) mit verschiedenen Datenformaten und Datenmodellen in die Automatisierungsanlage integriert werden. Dies wird ermöglicht durch Verwendung einer Ontologie-Engine (lokal) oder durch einen Ontologie-Service (remote). Durch die Ontologie-Engine bzw. den Ontologie-Service werden syntaktische und semantische Regeln in Form von Abbildungs- bzw. Mapping-Vorschriften bereitgestellt, durch die Daten der heterogenen Datenmodelle in Daten eines einheitlichen Datenmodells transformiert bzw. übersetzt werden können.

Die Datenabstraktionsschicht repräsentiert alle Daten aus der unterlagerten Geräte-Ebene in einer einheitlichen Struktur, Syntax und Semantik sowie in einem einheitlichen Format, so dass diese Daten unabhängig von der Datenquelle, aus der diese Daten ursprünglich strammen, von der Integrations-Middleware interpretiert werden können.

Die erfindungsgemäße Integrations-Middleware stellt ein einheitliches Interface zu den unterlagerten Geräten bzw. Datenquellen zur Verfügung, und zwar mit Hilfe einer harmonisierten, auf einem gemeinsamen Informationsmodell basierenden Daten-Repräsentation. Dadurch können die Daten von jedem Client-Tool verarbeitet werden, da das Client-Tool die umgewandelten Daten versteht und z. B. für Automatisierungsprozesse, Energiemanagement und prädiktive Instandhaltung nutzen kann. Zudem ist ein "Data Discovery" (Suche (alle) Parameter "Temperatur" im System) als auch ein "Data Search" (gezielte Suche mit Einbeziehung von Metadaten, z. B. suche alle Temperaturwerte in "Anlage A - Maschine 1 - über 100°C) durch die Client-Tools nicht mehr notwendig.

Die digitalen Abbilder der Datenquellen in Form von Instanzen können durch zusätzliche Informationen und/oder Metadaten über die Datenquellen erweitert werden, die für die Weiterverarbeitung oder Nutzung der Daten relevant sind. In diesem Fall besitzt die Instanz mehr Wissen über die Datenquelle als die Datenquelle selbst. Die Instanz ist das digitale Abbild des Gerätes/Systems bzw. der Datenquelle, welches neben der Datenmodellabbildung auch weitere Daten, wie Gerätebeschreibung oder weitere Informationen/Metadaten, über das Gerät oder die Datenquelle enthalten kann. Liegen die Quelldaten z.B. als Modbus-Daten vor, ist die Erweiterung der Instanz zwingend notwendig, um die Daten nutzbar zu machen, da Registeradressen allein nicht ausreichend sind, um eine vollständige Integration oder Nutzung der Daten zu ermöglichen. Durch die Informationen und/oder Metadaten wird das notwendige Wissen über Daten bereitgestellt. Parametemamen, deren Bedeutung sowie die Art der Interpretation, wie Skalierung, Einheit, Wertebereich u.a., sind durch die zusätzlichen Informationen und/oder Metadaten bekannt.

Die Daten können über das gemeinsame Interface in einem Format bereitgestellt werden, welches für ein gegebenes Client-Tool zum Verständnis geeignet ist, da verschiedenartige Client-Tools jeweils nur ein spezielles, domainspezifisches Datenmodell bzw. Datenformat verstehen können, wie z. B. Engineering-Tool, Energie Management Software oder MES für das jeweilige Marktsegment (Domain).

Insgesamt werden das Auffinden von Geräten (Device Discovery) und das Management der Geräte in einem Netzwerk, wie Automatisierungsanlage, vereinfacht. Das Auffinden der Geräte läuft automatisiert im Hintergrund und ist für einen Benutzer nicht sichtbar. Der Benutzer kann sich daher auf die für ihn nutzbaren und von ihm benötigten Daten aus dem System konzentrieren. Das Netzwerk bzw. die Automatisierungsanlage wird transparent. Die Implementierung von verschiedenen System-Funktionalitäten, wie Discovery, Identifikation, Datenaustausch, Offline-Repräsentation, und Services, wie Firmware-Loading, Konfigurations-Management und/oder Data-Licensing kann mit nur einem Interface und einer Technologie realisiert werden.

Als weitere Vorteile sind zu erwähnen:
- Geräte-Management und Handhabung sowie Nutzbarmachung der Gerätedaten werden stark vereinfacht und können größtenteils automatisiert werden.
- Client-Tools können sich auf das Wesentliche beschränken. Um auf Daten der Geräte zugreifen zu können müssen die Client-Tools nicht speziell ausgebildet sein, also z.B. in der Lage sein, verschiedene Verbindungs- und Zugriffsarten mit den von den Geräten bereitgestellten Daten zu handhaben. Es wird ein Zugangspunkt (Single Entry Point) zu den in einem einheitlichen Format dargestellten Gerätedaten bereitgestellt.
- Der Zugriff auf Daten von jeglichem Gerät der Geräteebene wird in einer Art und Weise ermöglicht, dass die Client-Tools diese Daten verstehen und nutzen können.

Gegenüber dem Stand der Technik sind folgende Merkmale hervorzuheben:
- Entkopplung der verschiedenartigen Geräte von ihren Daten unter Verwendung von Geräteinstanzen, die dann für Systeme, Applikationen und Client-Tools höherer Ebenen (upper layers) verfügbar sind.
- Integration von Geräten mit unbekannten Datenmodellen unter Verwendung von Informationen aus Gerätebeschreibungen, Produktdatenbanken sowie aus den Geräten selbst ausgelesener Daten und Datenbereichen in Kombination mit Abbildungsvorschriften einer Ontology-Engine bzw. eines Ontology-Services und zwar Domain-übergreifend, einschließlich Geräte von Drittanbietern sowie Altgeräte.
- Bereitstellung des Zugriffs auf Daten in einer verständlichen, also einfach interpretierbaren Repräsentation für die angeschlossenen Client-Tools.
- Bereitstellung eines flexiblen, gemeinsamen, einheitlichen und Clientunabhängigen (client agnostic) Interfaces für abstrahierte Geräte für Engineering-Zwecke, wie z. B. Discovery, Assoziation, Konfiguration, Parametrisierung, Firmware-Loading, Offline-/Onlinemodus, Simulation, Daten-Provisioning oder Data Licensing.

Durch das erfindungsgemäße Verfahren und die erfindungsgemäße Integrations-Middleware werden folgende Probleme des Standes der Technik gelöst:
1. Handhabung von verschiedenartigen Geräten mit verschiedenartigen Protokollen in einer einheitlichen Weise.
2. Integration von Geräten von Drittanbietern in Industrielösungen.
3. Das erfindungsgemäße Verfahren sowie die erfindungsgemäße Integrations-Middleware legen den Schwerpunkt auf die möglichst einfache Nutzbarmachung von Daten, wie Prozessdaten, Positionsdaten, Diagnosedaten, Produktdaten u.a., heterogener Datenquellen mit verschiedenen Datenmodellen und Datenformaten zur einheitlichen oder Client-spezifischen Darstellung und Verarbeitung. Die Frage des Datenaustauschs ist dabei nachrangig, da sie für den Gegenstand der Erfindung nicht relevant ist. Daher werden die Daten von Geräten mit einem gemeinsamen Interface und in einem gemeinsamen Repräsentationsformat bereitgestellt. Mittels des erfindungsgemäßen Verfahrens kann einfach auf die Daten zugegriffen und diese unmittelbar genutzt werden, da alle Daten der Geräte in einem Format vorliegen, welches unabhängig von dem ursprünglichen Datenmodell verstanden werden kann.
4. Erweiterbarkeit durch einheitliche Breitstellung von zusätzlichen Diensten, Darstellungen und Business-Modellen. Die Instanzen können mit zusätzlichen Diensten, z. B. Firmware Loading, gekoppelt bzw. bereitgestellt werden. Von dem Client Tool können die gerätespezifischen Dienste einheitlich abgerufen oder genutzt werden. Erweiterte Darstellung durch Anreicherung von Metadaten, z. B. eCl@ss Tags sowie Bereitstellung von neuen Business-Modellen, z. B. Data Licensing.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von den der Zeichnung zu entnehmenden bevorzugten Ausführungsbeispielen.

Es zeigen:
- Fig. 1: eine schematische Darstellung eines Layer-Konzepts einer Geräteintegrations-Middleware,
- Fig. 2: eine schematische Darstellung einer Architektur der Geräteintegrations-Middleware.

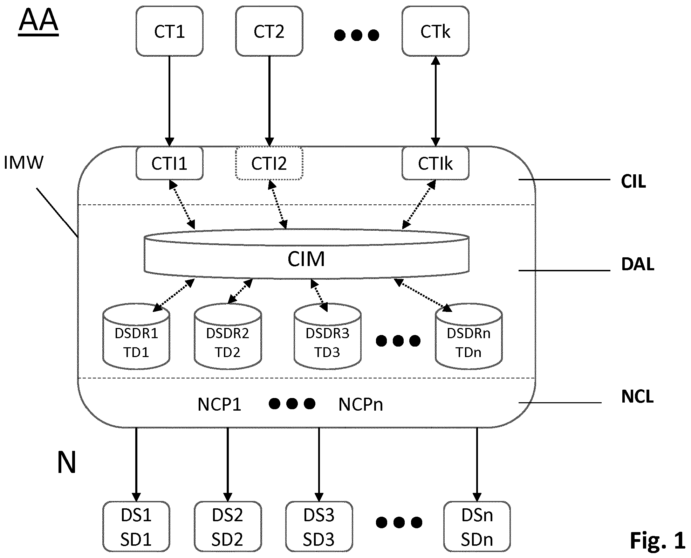

Fig. 1 zeigt in schematischer Darstellung eine Automatisierungsanlage (AA) mit einer erfindungsgemäßen Integrations-Middleware IMW zur Integration von Datenquellen DS1...DSn in ein Netzwerk N der Automatisierungsanlage (AA). Die Datenquellen DS1...DSn sind z.B. Feldgeräte wie Antriebssteuerungen, speicherprogrammierbare Steuerungen, Aktoren, Sensoren sowie Datensammel- und -überwachungsgeräte, deren Eigenschaften und Funktionen durch Quelldaten SD1...SDn beschrieben werden, wobei die Quelldaten z.B. nicht einschränkend Verwaltungsinformationen, ein Gerätemodell, Konsistenzinformationen, eine Kommunikationslogik, eine Beschreibung der Präsentation der Geräteparameter und Gerätefunktionen sowie Oberflächenanteile und/oder programmierbare Komponenten umfassen.

Die Datenquellen DS1...DSn können hinsichtlich ihres Gerätetyps, ihrer Protokolle und/oder Anbieter verschiedenartig sein. Die Datenquellen DS1...DSN können zudem aus verschiedenen Anwendungsbereichen (Domains) wie Energietechnik, Gebäudetechnik oder Prozesstechnik mit verschiedenen Datenformaten und verschiedenen Datenmodellen stammen.

Die Datenquellen DS1...DSn sind jeweils über Netzwerkverbindungspunkte NCP1...NCPn einer Netzwerkverbindungsschicht NCL mit einer Datenabstraktions-Schicht DAL verbunden. Die Datenabstraktions-Schicht DAL ist über eine Kommunikationsschicht CIL mit zumindest einem Client-Tool CT1...CTk, wie Engineering-Werkzeug, verbunden.

Gegenstand der Erfindung ist u.a. die Bildung bzw. Generierung der von den Datenquellen unabhängigen Datenabstraktions-Schicht DAL aus den Quelldaten SD1...SDn der Datenquellen DS1...DSn, wobei die Quelldaten SD1...SDn der verschiedenartigen Datenquellen DS1...DSn unter Anwendung von definierten semantischen und/oder syntaktischen Regeln (Datenzuordnungsregeln) in Zieldaten TD1...TDn eines gemeinsamen, nicht statischen Informationsmodells CIM transformiert werden, welches in der Datenabstraktions-Schicht DAL gespeichert und bereitgestellt wird. Das zumindest eine Client-Tool CT1...CTk kann über die gemeinsame Kommunikationsschicht CIL, wie beispielsweise eine Schnittstelle nach dem OPC-UA-Standard, auf die Zieldaten TD1...TDn des gemeinsamen Informationsmodells CIM zugreifen. Für jede Datenquelle DS1...DSn wird ein digitaler Repräsentant DSDR1...DSDRn erzeugt.

Jedes Client-Tool CT1...CTk ist über ein eigenes, kommunikations- bzw. clientunabhängiges (client agnostic) Interface CTI1...CTIk mit der Datenabstraktions-Schicht DAL gekoppelt sein. Das Client-Tool CT2 ist über das Interface CTI2 unmittelbar mit dem Informationsmodell CIM gekoppelt, da eine Umwandlung der Daten des Informationsmodells CIM in ein Datenmodell des Client-Tools CT2 nicht erforderlich ist. Die Client-Tools CT1...CTk stammen z. B. aus verschiedenen Anwendungsbereichen mit unterschiedlichen Datenmodellen und Datenformaten. Daher sind die Interfaces CTI1...CTIk entsprechend ausgebildet, um das von dem Informationsmodell CIM bereitgestellte Standard-Datenmodell inkl. Datenformate an das Datenmodell inkl. Datenformate des jeweiligen Client-Tools anzupassen.

Mit anderen Worten betrifft die Erfindung einen Ansatz zur Erzeugung der Datenabstraktions-Schicht DAL für die Client-Tools CT1...CTk aus den Quelldaten SD1...SDn der Datenquellen DS1...DSn aus dem Gerätelevel durch Bereitstellung der gemeinsamen Kommunikationsschicht CIL unter Verwendung z.B. des Standards OPC UA.

Das gemeinsame Informationsmodell CIM, welches in der Datenabstraktions-Schicht DAL angesiedelt ist, repräsentiert die heterogenen Quelldaten in einer einheitlichen Struktur, Syntax und Semantik sowie in einem einheitlichen Format, so dass die Client-Tools CT diese Daten unabhängig von der Domain, aus der diese Daten ursprünglich stammen, lesen können. Die Daten verwenden dieselbe Semantik und sind eindeutig interpretierbar, so dass ein Domain-übergreifendes und einheitliches Verständnis (Interpretation) der Daten gewährleistet ist.

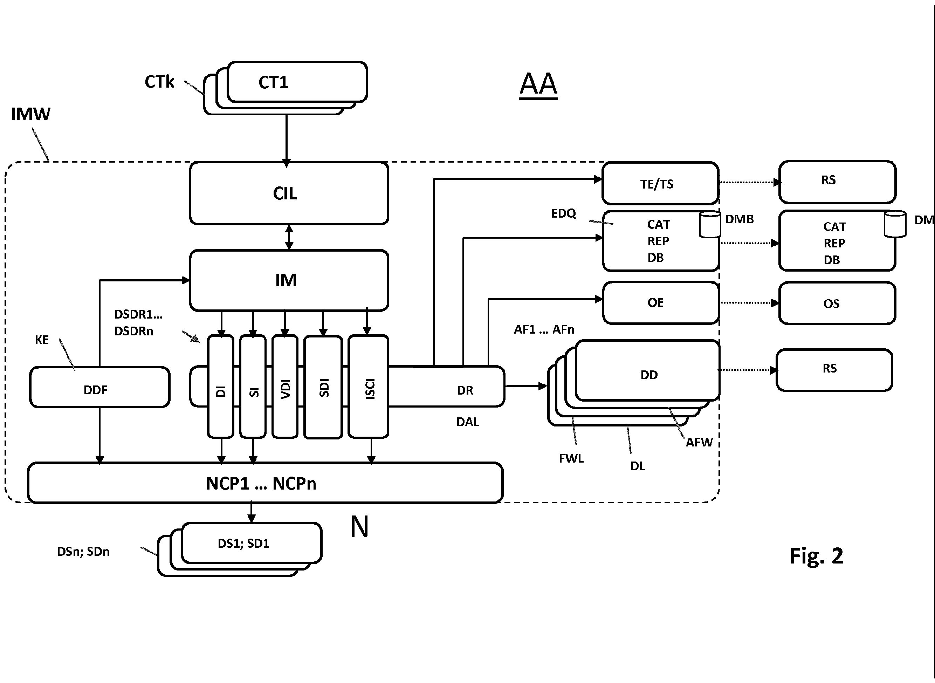

Fig. 2 zeigt in schematischer Darstellung eine Architektur der Integrations-Middleware IMW nach Fig. 1, deren Funktionen nachfolgend erläutert werden.

In der Integrations-Middleware IMW ist eine Kommunikationseinheit KE mit einer Geräte-Discovery-Funktion DDF implementiert, welche ausgebildet ist, in dem Netzwerk N der Automatisierungsanlage AA verfügbare Datenquellen DS1 ... DSn, wie Geräte oder Sub-Systeme, aufzufinden.

Die Geräte-Discovery-Funktion DDF ist ausgebildet, Identifikations- und Lokalitätsinformationen der Datenquellen DS1 .... DSn zu ermitteln und eine Netzwerkliste oder Topologie der Geräte-Ebene zu erstellen. Des Weiteren verwaltet die Geräte-Discovery-Funktion die Datenquellen-übergreifende Konsistenz.

Für jede detektierte Datenquelle DS1...DSn wird der digitale Repräsentant DSDR1...DSDRn der Datenquelle in Form einer Instanz, wie z. B. einer Geräte-Instanz DI, einer System-Instanz SI, einer Instanz VDI für ein virtuelles Gerät, einer Instanz SDI für ein simuliertes Gerät und/oder einer Instanz ISCI einer Infrastrukturkomponente aus den transformierten Zieldaten TD1...TDn, den Quelldaten CD1...CDn der ermittelten Datenquellen DS1...DSn und/oder den Daten der externen Datenquellen EDQ, wie Gerätedatenmodell-Beschreibung DD, Katalog CAT, Repository REP oder Datenbank DB erzeugt und in der Datenquellen-unabhängigen Schicht (DAL) gespeichert. Die Geräte-Discovery-Funktion DDF initiiert die Generierung oder das Update einer der Instanzen DI, SI, VDI, SDI, ISCI und stellt zudem Topologie-Informationen für die gemeinsame Datenpräsentation zur Verfügung und abstrahiert Netzwerk-Protokoll-spezifische Darstellungen einer Datenquelle.

Die Geräte-Discovery-Funktion DDF ist des Weiteren ausgebildet, um über die Netzwerkverbindungspunkte NCP1...NCPn mit den Datenquellen DS1...DSn zu kommunizieren und diese zu lokalisieren. In diesem Zusammenhang ist zu erwähnen, dass die Netzwerkverbindungspunkte NCP1...NCPn Instanzen für jedes Protokoll bereitstellen. Somit können einzelne Suchvorgänge für jedes Protokoll ausgeführt werden. Ferner werden Schnittstellen zur Erfassung von Identifikationsinformation einer Datenquelle und abstrakte Schnittstellen zum Datenaustausch mit Datenquellen zur Verfügung gestellt.

Die Instanzen DI, SI, VDI, SDI, ISCI werden erzeugt bzw. modifiziert, indem Daten entweder direkt aus der Datenquelle DS1...DSN oder indirekt über einen Instanz-Manager IM aus einer Geräte- bzw. System-Datenmodellbeschreibung DMB aus einem Katalog CAT, einem Repository REP und/oder einer Datenbank DB geladen und in der Instanz DI, SI, VDI, SDI, ISCI gespeichert werden. Die Instanz ist ferner ausgebildet, um dynamisch auf Werte in der Datenquelle zugreifen zu können, wenn diese Funktion benötigt wird. Dabei erfolgt eine Umsetzung von der einheitlichen Datendarstellung auf die in der Datenquelle verfügbare Datendarstellung.

Sollte das Datenmodell der Datenquelle DS1...DSn unbekannt oder in Form eines spezifischen Ziel-Datenmodells definiert sein, wird das Datenmodell und/oder Datenformat der Datenquelle unter Verwendung einer Ontology-Engine OE oder eines Ontology-Services OS in ein bekanntes Datenmodell bzw. Datenformat oder das Ziel-Datenmodell bzw. Ziel-Datenformat transformiert und in der Instanz DI, SI, VDI, SDI, ISCI gespeichert.

Betreffend die Erzeugung einer neuen Instanz ist anzumerken, dass jede Datenquelle durch eine zugehörige Instanz repräsentiert wird. Die Erzeugung einer Instanz wird durch eine "Discovery Notification" getriggert, wenn ein neues Gerät oder eine modifizierte Datenquelle detektiert wurde (Online-Fall).

Alternativ besteht die Möglichkeit, eine Instanz auf Anfrage eines Client-Tools durch eine Beschreibungsdatei oder einen Datenbankeintrag zu erzeugen (Offline-Fall).

Die Daten einer Datenquelle für den digitalen Repräsentanten bzw. das digitale Abbild können entweder Kopien oder Referenzen von Datenpunkten der Datenquelle sein oder in der Datenquelle gespeichert werden. Das bedeutet, dass die Gerätebeschreibungen aus dem Katalog CAT, dem Repository REP oder der Datenbank DB gelesen werden oder durch einen Suchvorgang in dem Netzwerk ermittelt werden.

In einem weiteren Verfahrensschritt können die Instanzen DI, SI, VDI, SDI, ISCI mit semantischen Metadaten angereichert werden, z. B. durch Bereitstellung zusätzlicher Referenzen und Informationen zu Standards durch Hinzufügen von zusätzlichen Metadaten für Datenpunkte oder Metadaten-Elementen. Für diese Funktion ist in der Integrations-Middleware eine Tag-Engine TE oder ein Tag-Service TS implementiert. Alternativ kann auch auf einen externen Service RS zugegriffen werden.

Ein weiterer Verfahrensschritt besteht darin, zu den Instanzen DI, SI, VDI, SDI, ISCI zusätzliche Funktionen AF1...AFN, wie Gerätebeschreibung DD, verfügbare FirmwareVersionen AFW und Services, wie Firmware-Loading FWL, zu den Instanzen DI, SI, VDI, SDI, ISCI hinzuzufügen.

Die Instanzen DI, SI, VDI, SDI, ISCI werden in dem gemeinsamen Informationsmodell CIM dargestellt. Die Geräte- und/oder Systemdaten werden über das einheitliche Interface CIL, z.B. via OPC UA als "Single-Entry-Point", den Client-Tools CT1...CTk bereitgestellt, wobei alle Daten in dem gemeinsamen Datenrepräsentationsformat bzw. dem gemeinsamen Informationsmodell CIM bereitgestellt werden. In diesem Zusammenhang ist anzumerken, dass in dem gemeinsamen Datenmodell auch Daten von Funktionsmodulen wie Diagnose-Funktion enthalten sind, so dass das Datenmodell mehr Informationen enthält als die ursprünglichen Daten der Datenquellen DS1...DSn.

Bei Verbindung eines Client-Tools CT1...CTk mit der Integrations-Middleware IMW hat das Client-Tool über die einheitliche, client-unabhängige Kommunikationsschicht CIL Zugriff auf die Daten des einheitlichen Informationsmodells CIM. Das Client-Tool kann direkt auf die Daten des einheitlichen Informationsmodells CIM zugreifen, sofern es diese Daten verstehen kann. Ansonsten erkennt die Client-unabhängige Integrations-Middleware IMW welches Client-Tool sich verbindet oder eine Anfrage in einem Format äußert. Anschließend kann die Integrations-Middleware reagieren und transformiert die Daten des einheitlichen Informationsmodells CIM in ein Format und eine Darstellung, welches/welche das Client-Tool CT1...CTk kennt (z. B. OPC UA => Format) und versteht (z. B. domainspezifisches Modell des Client-Tools => Darstellung) und stellt die transformierten Daten bereit. Durch die einheitliche client-unabhängige Kommunikationsschicht CIL erfolgt eine Anpassung bzw. Transformation der im einheitlichen Datenmodell CIM dargestellten vom Client-Tool angefragten Daten an den Bedarf des anfragenden Client-Tools. Das gilt insbesondere dann, wenn das Client-Tool aus einem anderen Anwendungsbereich (Domain) stammt und nur eine andere Datendarstellung benötigt, um die angefragten Daten verstehen und verarbeiten zu können.

Ein Datenaustausch kann erfolgen, indem die Client-Tools CT1...CTk die Daten der Datenquellen DS1...DSn via deren Instanzen (digitalen Repräsentanten) entweder offline, online, virtuell oder simuliert zugreifen.

Der Zugriff auf Daten und/oder Services der Instanzen DI, SI, VDI, SDI, ISCI erfolgt, indem sich das Client-Tool CT1...CTk mit dem zentralen Zugangspunkt (Single Entry Point) verbindet und den Zugriff auf die Root-Daten (Topologie und Funktionsmodule) startet. Anschließend wählt das Client-Tool CT1...CTk die Daten der Instanz DI, SI, VDI, SDI, ISCI aus und greift auf diese zu.

In einem weiteren, optionalen Verfahrensschritt kann mit einer Lizenz-Datenbank oder einem Service überprüft werden, ob ein Client-Tool CT1...CTk die Berechtigung oder die Lizenz hat, um auf den Datenservice zuzugreifen.

Wenn die Datenquelle DS1...DSn online ist oder temporär keine Daten gespeichert sind (Zeitlimit der Daten ist nicht abgelaufen) oder ein Metadaten-Parameter nicht vorhanden ist, ist eine Übersetzung der Service-Anfrage in das erforderliche Protokoll der Datenquelle erforderlich, um direkt auf die Daten in der Datenquelle zugreifen zu können.

Die zusätzlichen Funktionalitäten AF1...AFn umfassen z. B. die Funktion "Plug and Play": Damit kann ein neues Gerät bzw. Sub-System seine Ziel-Konfiguration automatisch über eine in der Instanz oder einer in einem Konfigurationsmanager gespeicherten Konfiguration erhalten.

Eine weitere zusätzliche Funktion ist "Firmware Loading" FWL, wobei ein Firmware-Loading-Vorgang über ein Firmware-Management-Modul mittels eines zusätzlichen Services des einheitlichen Interfaces CIL getriggert wird.

Die zusätzliche Funktion "Virtual Device" umfasst die Generierung einer neuen Instanz für nicht-existierende oder Offline-Geräte durch Hinzufügen einer Beschreibungsdatei oder eines Datenbankeintrags.

Die weitere zusätzliche Funktion "Simulated Device" fügt dem virtuellen Gerät eine Logikbeschreibung hinzu. Sowohl das "Virtual Device" als auch das "Simulated Device" sind als virtuelle Geräte mittels ihrer Instanzen VDI bzw. SDI repräsentiert. Durch obige Funktionen, allein oder in Kombination, wird eine einheitliche Darstellung sowie Vereinfachung des Datenzugangs, des Daten-Discovery und der Datensuche ermöglicht. Der Nutzer kann sich ausschließlich auf die Nutzung der Daten konzentrieren.

## Patentansprüche

1. Verfahren zur Integration von heterogenen Datenquellen (DS1...DSn) der Automatisierungstechnik in eine Automatisierungsanlage (AA), wobei die heterogenen Datenquellen (DS1...DSn) jeweils Quelldaten (SD1...SDn) unterschiedlicher Datenmodelle umfassen, wobei die Quelldaten (SD1...SDn) der zu integrierenden heterogenen Datenquellen (DS1...DSn) mittels einer Integrations-Middleware (IMW) in ein gemeinsames Datenmodell (CIM) transformiert werden,
**dadurch gekennzeichnet,**
**dass** die in der Automatisierungsanlage (AA) verfügbaren Datenquellen (DS1...DSn) mittels einer in der Integrations-Middleware (IMW) implementierten Discovery-Funktion (DF) aufgesucht und deren Quelldaten (SD1...SDn) geladen werden, dass die Quelldaten (DS1...DSn) der Datenquellen (SD1...SDn), deren Datenmodell unbekannt ist, mittels einer Ontologie-Engine (OE) oder durch einen Ontologie-Service (OS) in das gemeinsame Datenmodell (CIM) transformiert werden, wobei durch die Ontologie-Engine (OE) oder den Ontologie-Service (OS) syntaktische und semantische Regeln in Form von Datenzuordnungsvorschriften bereitgestellt werden, durch die die Quelldaten (SD1...SDn) in Zieldaten (TD1...TDn) des gemeinsamen Datenmodells (CIM) transformiert werden, die syntaktisch und semantisch dem gemeinsamen Datenmodell (CIM) entsprechen, dass für jede detektierte Datenquelle (DS1...DSn) mittels einem in der Integrations-Middleware implementierten Instanzen-Manager (IM) jeweils ein digitaler Repräsentant (DSDR1...DSDRn) in Form einer Instanz (DI, SI, VDI, SDI, ISCI) mit dem gemeinsamen Datenmodell (CIM) erzeugt und in einer Datenabstraktionsschicht (DAL) gespeichert wird, dass die Zieldaten (TD1...TDn) jeder Datenquelle (DS1...DSn) jeweils in dem digitalen Repräsentanten (DSDR1...DSDRn) in der Datenabstraktionsschicht (DAL) gespeichert werden und dass die Zieldaten (TD1 ... TDn) für zumindest ein Client-Tool (CT1...CTk) über eine Schnittstelle (CTI1...CTIk) bereitgestellt werden, welche ausgebildet ist, auf die digitalen Repräsentanten (DSDR1...DSDRn) der Zieldaten (TD1...TDn) gemäß des gemeinsamen Datenmodells (CIM) zuzugreifen.

2. Verfahren nach Anspruch 1,
**dadurch gekennzeichnet,**
**dass** die Datenquellen (DS1...DSn) mittels der Discovery-Funktion manuell oder automatisch wie zyklisch aufgesucht werden.

3. Verfahren nach Anspruch 1,
**dadurch gekennzeichnet,**
**dass** die Quelldaten (SD1...SDn) und/oder Daten externer Datenquellen (EDQ) in der Instanz (DI, SI, VDI, SDI, ISCI) gespeichert werden.

4. Verfahren nach Anspruch 1,
**dadurch gekennzeichnet,**
**dass** die Instanz (DI, SI, VDI, SDI, ISCI) als Geräte-Instanz (DI), System-Instanz (SI), Instanz eines virtuellen Gerätes (VDI), Instanz eines simulierten Gerätes (SDI) oder Instanz einer Infrastrukturkomponente (ISCI) erzeugt wird.

5. Verfahren nach Anspruch 3,
**dadurch gekennzeichnet,**
**dass** die Daten externer Datenquellen (EDQ) in Form einer Gerätedatenmodell-Beschreibung (DD), eines Katalogs (CAT), einer Repository (REP) oder einer Datenbank (DB) bereitgestellt werden.

6. Verfahren nach zumindest einem der vorhergehenden Ansprüche,
**dadurch gekennzeichnet,**
**dass** die Instanzen (DI, SI, VDI, SDI, ISCI) mit semantischen Metadaten erweitert werden, indem zusätzliche Referenzen und Informationen aus Standardprotokollen bereitgestellt werden, die den Zieldaten (TD1...TDn) in Form Metadaten-Elementen zugeordnet werden.

7. Verfahren nach zumindest einem der vorhergehenden Ansprüche,
**dadurch gekennzeichnet,**
**dass** die Instanzen (DI, SI, VDI, SDI, ISCI) mit zusätzlichen Informationen in Form von Gerätebeschreibungen (DD), verfügbaren Firmwareversionen (AFW) und Services in Form von Firmware-Loading (FWL) oder Data-Licensing (DL) erweitert werden.

8. Verfahren nach zumindest einem der vorhergehenden Ansprüche,
**dadurch gekennzeichnet,**
**dass** die durch die Instanzen (DI, SI, VDI, SDI, ISCI) repräsentierten Quelldaten (SD1...SDn), Daten externer Datenquellen (EDQ) einschließlich Funktionsmodule und/oder transformierte Zieldaten (TD1...TDn) in dem einheitlichen Datenmodell (CIM) mittels der zumindest einen Schnittstelle (CTI1...CTIk) als zentralem Zugangspunkt (Single Entry Point) über eine gemeinsame Kommunikationsschicht (CIL), wie OPC UA, bereitgestellt werden.

9. Integrations-Middleware (IMW) zur Integration von heterogenen Datenquellen (DS1...DSn) der Automatisierungstechnik in eine Automatisierungsanlage (AA), wobei die heterogenen Datenquellen (DS1...DSn) jeweils Quelldaten (SD1...SDn) unterschiedlicher Datenmodelle umfassen und wobei die Integrations-Middleware (IMW) über eine erste Kommunikationsschicht (NCL) mit den heterogenen Datenquellen (DS1...DSn) und über eine zweite Kommunikationsschicht (CIL) mit zumindest einem Client-Tool (CT1...CTk) verbindbar ist,
**dadurch gekennzeichnet,**
**dass** der Instanzen-Manager (IM) über eine Kommunikationseinheit (DE) mit der Automatisierungsanlage (AA) gekoppelt ist, wobei die Kommunikationseinheit (DE) eine Discovery-Funktion (DDF) aufweist, die ausgebildet ist, Datenquellen (DS1...DSn) in der Automatisierungsanlage (AA) aufzufinden und deren Quelldaten (SQ1...SQn) zu laden,
**dass** die Integrations-Middleware (IMW) einen Instanzen-Manager (IM) aufweist, der ausgebildet ist, für jede der Datenquellen (DS1...DSn) jeweils einen digitalen Repräsentanten (DSDR1...DSDRn) in Form einer Instanz (DI, SI, VDI, SDI, ISCI) mit einem gemeinsamen Datenmodell (CIM) zu erzeugen und in einer Datenabstraktionsschicht (DAL) zu speichern, dass der Instanzen-Manager (IM) mit einer Ontologie-Engine (OE) oder einem Ontologie-Service (OS) gekoppelt ist, mittels der oder dem die Quelldaten (SD1...SDn) der zu integrierenden Datenquellen (DS1...DSn), deren Datenmodell unbekannt ist, in das gemeinsame Datenmodell (CIM) transformiert werden, wobei durch die Ontologie-Engine (OE) oder den Ontologie-Service (OS) syntaktische und semantische Regeln in Form von Datenzuordnungsvorschriften bereitgestellt werden, durch die die Quelldaten (SD1...SDn) in Zieldaten (TD1...TDn) transformiert werden, die syntaktisch und semantisch dem gemeinsamen Datenmodell (CIM) entsprechen, wobei die Zieldaten (TD1...TDn) jeder Datenquelle (DS1...DSn) jeweils in dem digitalen Repräsentanten (DSDR1...DSDRn) in der Datenabstraktionsschicht (DAL) gespeichert sind und dass das zumindest eine Client-Tool (CT1...CTk) über eine Schnittstelle (CTI1...CTIk) mit den digitalen Repräsentanten (DSDR1...DSDRn) verbindbar ist, die ausgebildet ist, auf die digitalen Repräsentanten (DSDR1...DSDRn) der Zieldaten (TD1...TDn) gemäß des gemeinsamen Datenmodells (CIM) zuzugreifen.

10. Middleware nach Anspruch 9,
**dadurch gekennzeichnet,**
**dass** die Instanz (DI, SI, VDI, SDI, ISCI) in Form einer Geräte-Instanz (DI), einer System-Instanz (SI), einer Instanz eines virtuellen Gerätes (VDI), einer Instanz eines simulierten Gerätes (SDI) oder einer Instanz einer Infrastrukturkomponente (ISCI) ausgebildet.

11. Middleware nach Anspruch 9 oder 10,
**dadurch gekennzeichnet,**
**dass** in der Instanz (DI, SI, VDI, SDI, ISCI) die Quelldaten (SD1...SDn) des entsprechenden Quellgerätes und/oder Daten externer Datenquellen (EDQ) gespeichert sind.

12. Middleware nach Anspruch 11,
**dadurch gekennzeichnet,**
**dass** die externe Datenquelle (EQD) zur Bereitstellung externer Daten (ED) eine Gerätedatenmodell-Beschreibung (DD), ein Katalog (CAT), eine Repository (REP) oder einer Datenbank (DB) ist.

13. Middleware nach zumindest einem der Ansprüche 9 bis 12,
**dadurch gekennzeichnet,**
**dass** der Instanzen-Manager (IM) zur Bereitstellung der externen Daten (ED) mit der externen Datenquelle (EDQ) gekoppelt ist.

14. Middleware nach Anspruch 9,
**dadurch gekennzeichnet,**
**dass** die zumindest eine Schnittstelle (CTI1...CTIk) als zentraler Zugangspunkt (Single Entry Point) über die einheitliche, client-unabhängige zweite Kommunikationsschicht (CIL), wie OPC UA, mit den digitalen Repräsentanten (DRDS1...DRDSn) gekoppelt ist.

## Claims

1. Method for integrating heterogeneous data sources (DS1...DSn) of automation technology into an automation system (AA), the heterogeneous data sources (DS1...DSn) each comprising source data (SD1...SDn) of different data models, said source data (SD1 ...SDn) of the heterogeneous data sources (DS1...DSn) to be integrated being transformed by means of an integration middleware (IMW) into a common data model (CIM),
wherein
the data sources (DS1...DSn) available in the automation system (AA) are identified by means of a discovery function (DF) implemented in the integration middleware (IMW) and their source data (SD1...SDn) are loaded; the source data (DS1...DSn) of the data sources (SD1...SDn) whose data model is unknown is transformed by means of an ontology engine (OE) or by an ontology service (OS) into the common data model (CIM), with syntactic and semantic rules in the form of data mapping regulations being provided by the ontology engine (OE) or by the ontology service (OS), by which rules the source data (SD1...SDn) is transformed into target data (TD1...TDn) of the common data model (CIM) that corresponds syntactically and semantically to the common data model (CIM); a digital representative (DSDR1 ...DSDRn) in the form of an instance (DI, SI, VDI, SDI, ISCI) is generated with the common data model (CIM) for each detected data source (DS1...DSn) by means of an instance manager (IM) implemented in the integration middleware and saved in a data abstraction layer (DAL); the target data (TD1...TDn) of each data source (DS1...DSn) is saved in the data abstraction layer (DAL) in the respective digital representative (DSDR1...DSDRn); and the target data (TD1...TDn) is provided for at least one client tool (CT1...CTk) via an interface (CTI1 ...CTIk) which is designed to access the digital representative (DSDR1...DSDRn) of the target data (TD1...TDn) in accordance with the common data model (CIM).

2. Method according to claim 1,
wherein
the data sources (DS1...DSn) are identified manually or automatically, such as cyclically, by means of the discovery function.

3. Method according to claim 1,
**wherein**
the source data (SD1...SDn) and/or data of external data sources (EDQ) is saved in the instance (DI, SI, VDI, SDI, ISCI).

4. Method according to claim 1,
**wherein**
the instance (DI, SI, VDI, SDI, ISCI) is generated as a device instance (DI), system instance (SI), virtual device instance (VDI), simulated device instance (SDI) or infrastructure component instance (ISCI).

5. Method according to claim 3,
**wherein**
the data of external data sources (EDQ) is provided in the form of a device data model description (DD), a catalog (CAT), a repository (REP) or a database (DB).

6. Method according to at least one of the preceding claims,
**wherein**
the instances (DI, SI, VDI, SDI, ISCI) are expanded with semantic metadata, by additional references and information being provided from standard protocols that are mapped to the target data (TD1...TDn) in the form of metadata elements.

7. Method according to at least one of the preceding claims,
**wherein**
the instances (DI, SI, VDI, SDI, ISCI) are expanded with additional information in the form of device descriptions (DD), available firmware versions (AFW) and services in the form of firmware loading (FWL) or data licensing (DL).

8. Method according to at least one of the preceding claims,
**wherein**
the source data (SD1...SDn) represented by the instances (DI, SI, VDI, SDI, ISCI), data of external data sources (EDQ) including function modules and/or transformed target data (TD1...TDn) are provided in the common data model (CIM) by means of the at least one interface (CTI1 ...CTIk) as the single entry point via a common communication layer (CIL), such as OPC UA.

9. Integration middleware (IMW) for integrating heterogeneous data sources (DS1...DSn) of automation technology into an automation system (AA), the heterogeneous data sources (DS1...DSn) each comprising source data (SD1...SDn) of different data models and the integration middleware (IMW) being connectable to the heterogeneous data sources (DS1...DSn) via a first communication layer (NCL) and to at least one client tool (CT1...CTk) via a second communication layer (CIL),
wherein
the instance manager (IM) is linked to the automation system (AA) via a communication unit (DE) having a discovery function (DDF) designed to identify data sources (DS1...DSn) in the automation system (AA) and to load their source data (SQ1...SQn); the integration middleware (IMW) has an instance manager (IM) designed to generate a digital representative (DSDR1 ...DSDRn) in the form of an instance (DI, SI, VDI, SDI, ISCI) for each of the data sources (DS1...DSn) with a common data model (CIM) and save it in a data abstraction layer (DAL); the instance manager (IM) is linked to an ontology engine (OE) or ontology service (OS) by means of which the source data (SD1...SDn) of the data sources (DS1...DSn) to be integrated whose data model is unknown is transformed into the common data model (CIM), with syntactic and semantic rules in the form of data mapping regulations being provided by the ontology engine (OE) or by the ontology service (OS), by which rules the source data (SD1...SDn) is transformed into target data (TD1...TDn) that corresponds syntactically and semantically to the common data model (CIM), the target data (TD1 ...TDn) of each data source (DS1...DSn) being saved in the data abstraction layer (DAL) in the respective digital representative (DSDR1...DSDRn); and the at least one client tool (CT1...CTk) is connectable to the digital representative (DSDR1...DSDRn) via an interface (CTI1...CTIk) which is designed to access the digital representative (DSDR1...DSDRn) of the target data (TD1 ...TDn) in accordance with the common data model (CIM).

10. Middleware according to claim 9,
wherein
the instance (DI, SI, VDI, SDI, ISCI) is designed in the form of a device instance (DI), system instance (SI), virtual device instance (VDI), simulated device instance (SDI) or
infrastructure component instance (ISCI).

11. Middleware according to claim 9 or 10,
wherein
the source data (SD1...SDn) of the corresponding source device and/or data of external data sources (EDQ) is saved in the instance (DI, SI, VDI, SDI, ISCI).

12. Middleware according to claim 11,
wherein
the external data source (EQD) for providing external data (ED) is a device data model description (DD), a catalog (CAT), a repository (REP) or a database (DB).

13. Middleware according to at least one of the claims 9 to 12,
wherein
the instance manager (IM) for providing external data (ED) is linked to the external data source (EDQ).

14. Middleware according to claim 9,
wherein
the at least one interface (CTI1...CTIk) as the single entry point is linked to the digital representative (DRDS1...DRDSn) via the common client-independent second communication layer (CIL), such as OPC UA.

## Revendications

1. Procédé d'intégration de sources de données hétérogènes (DS1...DSn) de la technique d'automatisation dans une installation d'automatisation (AA), sachant que les sources de données hétérogènes (DS1...DSn) comprennent chacune des données sources (SD1...SDn) de différents modèles de données, sachant que les données sources (SD1...SDn) des sources de données hétérogènes (DS1...DSn) à intégrer sont transformées en un modèle de données commun (CIM) au moyen d'un intergiciel d'intégration (IMW),
**caractérisé en ce**
**que** les sources de données (DS1...DSn) disponibles dans l'installation d'automatisation (AA) sont recherchées au moyen d'une fonction de découverte (DF) implémentée dans l'intergiciel d'intégration (IMW) et leurs données sources (SD1...SDn) sont chargées, que les données sources (DS1...DSn) des sources de données (SD1...SDn), dont le modèle de données est inconnu, sont transformées en modèle de données commun (CIM) au moyen d'un moteur d'ontologie (OE) ou d'un service d'ontologie (OS), sachant que le moteur d'ontologie (OE) ou le service d'ontologie (OS) fournissent des règles syntaxiques et sémantiques sous la forme de règles de mappage de données, au moyen desquelles les données sources (SD1...SDn) sont transformées en données cibles (TD1...TDn) du modèle de données commun (CIM), lesquelles correspondent syntaxiquement et sémantiquement au modèle de données commun (CIM), que, pour chaque source de données détectée (DS1....DSn), un représentant numérique (DSDR1...DSDRn) est généré chaque fois au moyen d'un gestionnaire d'instance (IM) implémenté dans l'intergiciel d'intégration sous forme d'une instance (DI, SI, VDI, SDI, ISCI) avec le modèle de données commun (CIM) et est stocké dans une couche d'abstraction de données (DAL), que les données cibles (TD1...TDn) de chaque source de données (DS1...DSn) sont stockées chaque fois dans le représentant numérique (DSDR1...DSDRn) dans la couche d'abstraction de données (DAL), et en ce que les données cibles (TD1...TDn) sont mises à la disposition d'au moins un outil client (CT1...CTk) par l'intermédiaire d'une interface (CTI1...CTIk), laquelle est conçue pour accéder aux représentants numériques (DSDR1...DSDRn) des données cibles (TD1...TDn) conformément au modèle de données commun (CIM).

2. Procédé selon la revendication 1,
**caractérisé en ce**
**que** les sources de données (DS1...DSn) sont recherchées manuellement ou automatiquement, par exemple de manière cyclique, au moyen de la fonction de découverte.

3. Procédé selon la revendication 1,
**caractérisé en ce**
**que** les données sources (SD1...SDn) et/ou les données de sources de données externes (EDQ) sont stockées dans l'instance (DI, SI, VDI, SDI, ISCI).

4. Procédé selon la revendication 1,
**caractérisé en ce**
**que** l'instance (DI, SI, VDI, SDI, ISCI) est générée sous forme d'une instance de dispositif (DI), d'une instance de système (SI), d'une instance de dispositif virtuel (VDI), d'une instance de dispositif simulé (SDI) ou d'une instance de composant d'infrastructure (ISCI).

5. Procédé selon la revendication 3,
**caractérisé en ce**
**que** les données des sources de données externes (EDQ) sont fournies sous forme d'une description de modèle de données de dispositif (DD), d'un catalogue (CAT), d'un référentiel (REP) ou d'une base de données(DB).

6. Procédé selon au moins l'une des revendications précédentes,
**caractérisé en ce**
**que** les instances (DI, SI, VDI, SDI, ISCI) sont étendues avec des métadonnées sémantiques en fournissant des références et des informations supplémentaires provenant de protocoles standard qui sont assignées aux données cibles (TD1...TDn) sous la forme d'éléments de métadonnées.

7. Procédé selon au moins l'une des revendications précédentes,
**caractérisé en ce**
**que** les instances (DI, SI, VDI, SDI, ISCI) sont étendues avec des informations supplémentaires sous forme de descriptions de dispositifs (DD), de versions de micrologiciels disponibles (AFW) et de services sous forme de chargement de micrologiciels (FWL) ou de licences de données (DL).

8. Procédé selon au moins l'une des revendications précédentes,
**caractérisé en ce**
**que** les données sources (SD1...SDn) représentées par les instances (DI, SI, VDI, SDI, ISCI), les données de sources de données externes (EDQ) y compris les modules fonctionnels et/ou les données cibles transformées (TD1...TDn) sont mises à disposition dans le modèle de données commun (CIM) au moyen d'au moins une interface (CTI1...CTIk) en tant que point d'accès central (point d'entrée unique) via une couche de communication commune (CIL), telle que OPC UA.

9. Intergiciel d'intégration (IMW) pour l'intégration de sources de données hétérogènes (DS1...DSn) de la technique d'automatisation dans une installation d'automatisation (AA), sachant que les sources de données hétérogènes (DS1...DSn) comprennent chacune des données sources (SD1...SDn) de différents modèles de données et sachant que l'intergiciel d'intégration (IMW) peut être connecté aux sources de données hétérogènes (DS1...DSn) via une première couche de communication (NCL) et à au moins un outil client (CT1...CTk) via une deuxième couche de communication (CIL),
**caractérisé en ce**
**que** le gestionnaire d'instance (IM) est couplé à l'installation d'automatisation (AA) par l'intermédiaire d'une unité de communication (DE), sachant que l'unité de communication (DE) présente une fonction de découverte (DDF), laquelle est conçue pour trouver des sources de données (DS1...DSn) dans l'installation d'automatisation (AA) et charger leurs données sources (SQ1...SQn),
**que** l'intergiciel d'intégration (IMW) présente un gestionnaire d'instance (IM), lequel est conçu pour générer pour chacune des sources de données (DS1...DSn) chaque fois un représentant numérique (DSDR1...DSDRn) sous forme d'une instance (DI, SI, VDI, SDI, ISCI) avec un modèle de données commun (CIM) et de la stocker dans une couche d'abstraction de données (DAL), sachant que le gestionnaire d'instance (IM) est couplé à un moteur d'ontologie (OE) ou un service d'ontologie (OS), à l'aide duquel les données sources (SD1...SDn) des sources de données (DS1...DSn) à intégrer, dont le modèle de données est inconnu, sont transformées en un modèle de données commun (CIM), sachant que le moteur d'ontologie (OE) ou le service d'ontologie fournissent des règles syntaxiques et sémantiques sous la forme de règles de mappage de données, au moyen desquelles les données sources (SD1...SDn) sont transformées en données cibles (TD1...TDn), lesquelles correspondent syntaxiquement et sémantiquement au modèle de données commun (CIM), sachant que les données cibles (TD1...TDn) de chaque source de données (DS1.... DSn) sont chaque fois stockées dans le représentant numérique (DSDR1...DSDRn) dans la couche d'abstraction de données (DAL) et qu'au moins un outil client (CT1...CTk) est raccordable aux représentants numériques (DSDR1...DSDRn) via une interface (CTI1...CTIk), laquelle est conçue pour accéder aux représentants numériques (DSDR1..DSDRn) des données cibles (TD1...TDn) conformément au modèle de données commun (CIM).

10. Intergiciel selon la revendication 9,
**caractérisé en ce**
**que** l'instance (DI, SI, VDI, SDI, ISCI) est conçue sous la forme d'une instance de dispositif (DI), d'une instance de système (SI), d'une instance de dispositif virtuel (VDI), d'une instance de dispositif simulé (SDI) ou d'une instance de composant d'infrastructure (ISCI).

11. Intergiciel selon la revendication 9 ou 10,
**caractérisé en ce**
**que** les données sources (SD1...SDn) du dispositif source correspondant et/ou les données des sources de données externe (EDQ) sont stockées dans l'instance (DI, SI, VDI, SDI, ISCI).

12. Intergiciel selon la revendication 11,
**caractérisé en ce**
**que** la source de données externe (EQD) servant à fournir les données externes (ED) est une description de modèle de données de dispositif (DD), un catalogue (CAT), référentiel (REP) ou une banque de données (DB).

13. Intergiciel selon au moins l'une des revendications 9 à 12,
**caractérisé en ce**
**que** le gestionnaire d'instance (IM) est couplé à la source de données externe (EDQ) pour fournir les données externes (ED).

14. Intergiciel selon la revendication 9,
**caractérisé en ce**
**qu'**au moins une interface (CTI1...CTIk) est couplée aux représentants numériques (DR DS1...DRDSn) en tant que point d'accès (point d'entrée unique) via la deuxième couche de communication (CIL) uniforme, indépendante du client, telle que OPC UA.
